# EUROPEAN PATENT APPLICATION

(11) **EP 4 000 418 A1**
(43) Date of publication of application: **25.05.2022**
(21) Application number: 21383035.9
(22) Date of filing: 15.11.2021
(51) Int. Cl.: A23L 27/12

(54) **CITRUS CONCENTRATE FOR SEASONING NATURAL OR COOKED FOODS**

(30) Priority: 16.11.2020 ES 202031147
(71) Applicant: Rodriguez Dominguez, Maria Paz, 43540 Sant Carles de la Ràpita (Tarragona) (ES)
(72) Inventor: Rodriguez Dominguez, Maria Paz, 43540 Sant Carles de la Ràpita (Tarragona) (ES)
(74) Representative: Herrero & Asociados, S.L.

(57) **Abstract**

Citrus concentrate for seasoning natural or cooked foods, comprising peel of a first citrus fruit in a percentage of between 20 and 40 %, juice of the first citrus fruit in a percentage of between 10 and 25 %, sweetener in a percentage of between 5 and 15 % and fat in a percentage of between 30 and 50 %, where these values refer to percentages by weight of the final product.

A process for making citrus concentrate for seasoning natural or cooked foods, comprising the steps of peeling (1) a first citrus fruit; blanching (2) the peel thereof; squeezing (3) the juice of the first citrus fruit; adding (4) the squeezed juice to the previously blanched peel and crushing the whole; adding (5) sweetener; and adding (6) fat.

## Description

### Technical field of the invention

The present invention corresponds to the technical field of foodstuffs, specifically to those ingredients for seasoning both natural and cooked foods.

### Background of the Invention

Nowadays there is a great development of cooking techniques, always in search of better quality recipes.

As an aid in the preparation of recipes and dishes, a very important and widely used element is the seasoning. A seasoning is an ingredient, or usually a combination or preparation that contains the necessary elements to enhance the flavor of a dish.

There are many seasonings that provide different flavours to dishes, each one being normally recommended for specific dishes and recipes.

One of these seasonings is citrus, which has multiple qualities such as its high content of vitamin C and citric acid, which gives them that typical sour taste so characteristic.

These citrus fruits with which a citrus seasoning is made have always been linked to the concept of health and have a long list of properties among which highlights its extraordinary cleansing power, which helps to keep clean and healthy intestines and blood, and if these are clean, almost all health problems are reduced.

It also has iron, calcium, phosphorus, potassium, magnesium, ... and vitamins including vitamin C, which is involved in the maintenance of bones, teeth and blood vessels, as it participates positively in the formation and maintenance of collagen. It also protects vitamin A and vitamin E from oxidation, and has an anti-infectious and antitoxic action.

Because of all these qualities and because of the highly appreciated flavour it provides, it is a widely used seasoning.

However, cooks encounter a disadvantage when adding this seasoning to food, as the best conditions are found when the product is fresh, as if it has been stored in cold storage its flavour is modified, losing its initial characteristics.

However, nowadays it is difficult to find the product fresh, as it is usually kept in cold storage.

Another disadvantage is the waste of time that involves having to squeeze the product to extract the juice and strain it, or grate the skin of the same, and also having to correct the acidity factor of the juice, without altering the food to which we incorporate it.

Likewise, when adding the juice to the food, whether it is a sauce or a dough, as it is liquid, it dilutes the taste of the food as it expands making it more liquid.

### Description of the invention

The citrus concentrate for seasoning natural or cooked food presented herein comprises peel of a first citrus fruit in a percentage of between 20 and 40 %, juice of said first citrus fruit in a percentage of between 10 and 25 %, sweetener in a percentage of between 5 and 15 % and fat in a percentage of between 30 and 50 %, wherein these values refer to percentages on the weight of the final product.

In addition to the citric concentrate for seasoning natural or cooked foods, a process for the preparation of said citric concentrate is presented in this report. This process comprises a series of stages.

Thus, a first stage of the procedure consists of peeling a first citrus fruit.

A second phase is formed by blanching the peel of the first citrus fruit.

Then, a third phase consists of squeezing the juice of the first citrus fruit, followed by a fourth phase of adding the squeezed juice to the previously blanched peel and crushing the whole.

A fifth phase consists of the addition of the sweetener and, finally, a sixth phase is carried out in which the fat is added.

With the citrus concentrate for seasoning natural or cooked foods proposed herein, a significant improvement over the state of the art is obtained.

This is because we get a citrus concentrate to season the dishes, which is completely natural and with all the characteristics and flavor that would present if the citrus was freshly picked from the field. In 100% natural, without preservatives or colourings, without any type of allergen or intolerance, gluten-free and lactose-free.

Moreover, the consistency of the concentrate is such that it is not a disadvantage when added to food, as it maintains the consistency of the food and does not make it more liquid, which does not dilute the flavour of the food.

It is an ingredient or complement to any cooking preparation, whether it is a dish, a vinaigrette, a sauce... both hot and cold, and also for confectionery. With this concentrate you can bring the flavour and aroma of the citrus fruit to the food. As the concentrate is already prepared, ready to use, it can be added just when it is needed, without having to stop to squeeze the juice, thus saving time.

This concentrate provides the dish or food to which it is added with all the properties of the citrus fruits used. Citrus fruits are excellent foods for health. They are fresh, can be consumed in the form of fruit or juice and provide a multitude of benefits. A balanced diet ensures extra health and the fact of knowing the properties of certain foods, such as citrus fruits, and how to combine them, helps us to enhance the good nutritional effects.

Citrus fruits provide a good dose of vitamins, especially group C, and are an excellent source of fibre. In addition, these fruits are essential for a good absorption of iron by the body. This is because foods containing vitamin C help the body to use iron in an optimal way, in addition to enhancing its flavor.

In this aspect, iron is a very important mineral for health, as it helps in the formation of muscles and in the strengthening of bones. It is also responsible for the formation of red blood cells, so an iron deficiency causes anaemia.

Thus, a citrus concentrate is obtained with which the time of elaboration of the food is reduced and in addition, the results of the seasoned food of very high quality are obtained because the flavour of the same is maintained intact, improved with the concentrate that presents a natural flavour not deteriorated and with the contribution to the food on the part of the above mentioned concentrate, of the characteristics that present the citrus fruits, so beneficial for the health.

### Brief description of the drawings

In order to assist in a better understanding of the features of the invention, in accordance with a preferred example of a practical embodiment thereof, there is provided as an integral part of said description, a series of drawings in which, for illustrative and non-limiting purposes, the following has been represented:
Figure 1.- Shows a block diagram of the citrus concentrate preparation procedure for a first preferred embodiment of the invention.
Figure 2.- Shows a block diagram of the citrus concentrate preparation procedure for a second preferred embodiment of the invention.

### Detailed description of a preferred embodiment of the invention

In a first preferred embodiment of the invention, the citrus concentrate for seasoning natural or cooked foods proposed herein comprises peel of a first citrus fruit in a percentage comprised between 20 and 40 %; juice of said first citrus fruit in a percentage comprised between 10 and 25 %; sweetener in a percentage comprised between 5 and 15 %; and, fat in a percentage comprised between 30 and 50 %, wherein these values refer to percentages on the weight of the final product.

Thus, in this first preferred embodiment of the invention, the first citrus fruit is composed of lemon (L) or lime, being in this case in particular lemon, and a percentage preferably comprised between 30 and 40% is used.

Likewise, from said first citrus fruit, lemon (L), the juice is extracted, which in this first embodiment is added in a percentage of between 15 and 25%.

In this first preferred embodiment of the invention, the citric concentrate further comprises a sweetener consisting of sucrose and/or fructose. Specifically, in this preferred embodiment, the sweetener consists of agave syrup (S), in a percentage of between 8 and 12% by weight of the final product.

In this first preferred embodiment of the invention, the fat of the citric concentrate consists of sunflower oil (G), and is added thereto in a percentage of between 60 and 40% by weight of the final product.

In a second preferred embodiment of the invention, the first citric of the citric concentrate is composed of orange (N), and in this case, it is added in a percentage comprised between 20 and 30%.

Likewise, in this second preferred embodiment, the citrus concentrate comprises a percentage of between 0,5 and 5 % of a second citrus fruit, which in this case consists of lemon (L) or lime, in particular lemon.

In this second embodiment, the fat also consists of sunflower oil (G) and is added in a percentage of between 40 and 50%.

In this report, a procedure for the preparation of a citrus concentrate as defined herein is presented.

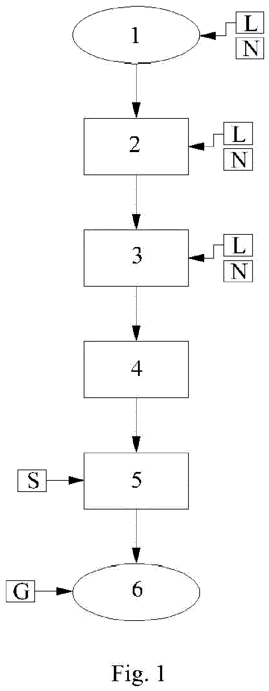

In view of Figure 1 provided, it can be seen how, in a first preferred embodiment of the invention, the process for preparing a citrus concentrate for seasoning natural or cooked foods presented herein comprises a series of stages.

Thus, it comprises a first stage consisting of the peeling (1) of a first citrus fruit, which in this preferred embodiment of the invention is lemon (L).

The second stage consists of blanching (2) the lemon peel (L). This blanching is carried out several times.

The third stage consists of squeezing (3) the lemon juice (L), and then the fourth stage consists of adding (4) said lemon juice (L) to the lemon peel (L) previously scalded and crushing the whole.

The procedure comprises a fifth phase consisting of adding (5) sweetener, which in this preferred embodiment of the invention is agave syrup (S) and a sixth phase consisting of adding (6) fat, consisting in this case of sunflower oil (G).

A process is proposed for a second embodiment, wherein the first citrus of the citrus concentrate comprises orange (N), thus the peel of the first and second phases is orange (N), and the juice of the third and fourth phases is orange (N) as well.

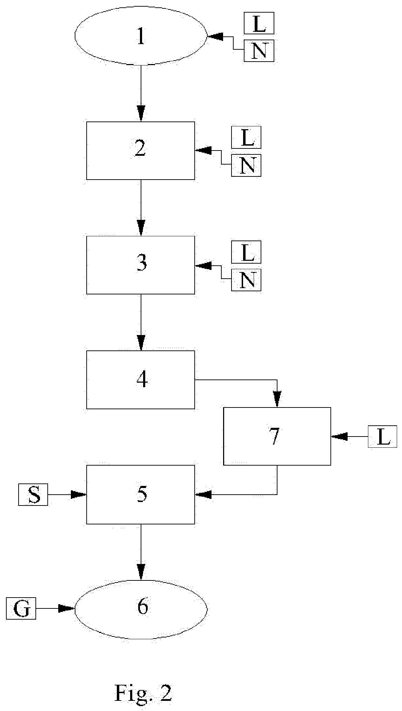

In this case, in addition, and as can be seen in Figure 2, after the fourth phase of addition (4) of the orange juice (N) and crushing of the whole, there is an additional phase of squeezing and addition (7) of the juice of a second citrus fruit, which in this second embodiment is lemon (L), and which is incorporated into the concentrate prior to the fifth phase in which the sweetener is added (5).

## Claims

1. Citrus concentrate for seasoning natural or cooked foods, **characterised in that it** comprises peel of a first citrus fruit in a percentage of between 20 and 40 %, juice of said first citrus fruit in a percentage of between 10 and 25 %, sweetener in a percentage of between 5 and 15 % and fat in a percentage of between 30 and 50 %, where these values refer to percentages by weight of the final product.

2. Citrus concentrate for seasoning natural or cooked foods, according to claim 1, **characterised in that** the first citrus fruit comprises lemon (L) or lime.

3. Citrus concentrate for seasoning natural or cooked foods, according to claim 1, **characterised in that** the first citrus fruit consists of orange (N).

4. Citrus concentrate for seasoning natural or cooked foods, according to claim 3, **characterised in that it** comprises a percentage of between 0,5 and 5 % of a second citrus fruit.

5. Citrus concentrate for seasoning natural or cooked foods, according to claim 4, **characterised in that** the second citrus fruit consists of lemon (L) or lime.

6. Citrus concentrate for seasoning natural or cooked foods, according to any of the preceding claims, **characterised in that** the sweetener consists of sucrose and/or fructose.

7. Citrus concentrate for seasoning natural or cooked foods, according to claim 6, **characterised in that** the sweetener consists of agave syrup (S).

8. Citrus concentrate for seasoning natural or cooked foods, according to any of the preceding claims, **characterised in that** the fat consists of sunflower oil (G).

9. A process for producing citrus concentrate for seasoning natural or cooked foods, as defined in claims 1 to 8, **characterised in that it** comprises the following steps:
- peeling (1) of a first citrus fruit;
- blanching (2) of the peel of the first citrus fruit;
- squeezed (3) from the juice of the first citrus fruit;
- addition (4) of the squeezed juice to the previously blanched skin and, crushing of the whole;
- add (5) sweetener;
- add (6) fat.

10. Process for making citrus concentrate for seasoning natural or cooked foods, according to claim 10, **characterised in that it** comprises an additional phase of squeezing and adding (7) the juice of a second citrus fruit, which is incorporated into the concentrate, prior to the phase in which the sweetener is added (5).
